# EUROPEAN PATENT SPECIFICATION

(11) **EP 2 517 863 B1**
(45) Date of publication and mention of the grant of the patent: **10.08.2016**
(21) Application number: 10839565.8
(22) Date of filing: 24.12.2010
(51) Int. Cl.: B29C 70/38, B29K 105/08, B29L 31/08

(54) **DEVICE FOR LAMINATING REINFORCEMENT FIBER BASED MATERIAL AND METHOD FOR LAMINATING SAME**
VORRICHTUNG ZUR LAMINIERUNG EINES VERSTÄRKUNGSFASER-BASISMATERIALS SOWIE VERFAHREN ZU DESSEN LAMINIERUNG
DISPOSITIF ET PROCÉDÉ DE STRATIFICATION D'UN MATÉRIAU A BASE DE FIBRES DE RENFORT

(30) Priority: 25.12.2009 JP 2009296149
(43) Date of publication of application: 31.10.2012
(73) Proprietor: Mitsubishi Heavy Industries, Ltd., Tokyo 108-8215 (JP)
(72) Inventor: SHINDO, Kentaro, Tokyo 108-8215 (JP); KAWASETSU, Nozomu, Tokyo 108-8215 (JP); KUROIWA, Takao, Tokyo 108-8215 (JP); YAMASAKI, Hirokazu, Tokyo 108-8215 (JP)
(74) Representative: Intès, Didier Gérard André
(86) International application number: PCT/JP2010/073368
(87) International publication number: WO 2011/078336

(56) References cited:
- JP-A- 2003 127 157
- JP-A- 2004 130 723
- JP-A- 2005 163 538
- JP-A- 2006 218 720
- JP-U- H0 610 529
- US-A1- 2004 069 413

## Description

### {Technical Field}

The present invention relates to a fiber-reinforced base material laminating apparatus and a method for the same, and in particular, to a method for laminating a sheet-like fiber-reinforced base material on a curved or bent mold.

### {Background Art}

Fiber-reinforced plastics (FRPs) or the like are generally used as lightweight and high-strength composite materials in large structural members for aircraft, architecture, wind turbines, etc. Fiber reinforced plastics are formed by laminating a fiber-reinforced base material on a mold, followed by impregnating it with plastic, and curing the impregnated plastic. Apparatuses for laminating a fiber-reinforced base material on a mold are disclosed in Patent Literatures 1 to 3.
Patent Literature 4 discloses an apparatus for disposing a pre-preg fabric to be laminated on a mold, having a sheet-feeding unit feeding the pre-preg fabric and a pressure contact unit having a narrower width than the pre-preg fabric. Patent literature 4 discloses an apparatus according to the preamble of claim 1.

### {Citation List}

### {Patent Literature}

{PTL 1} Japanese Examined Patent Application, Publication No. Hei 6-39133
{PTL 2} Japanese Unexamined Patent Application, Publication No. Hei 5-254724
{PTL 3} Japanese Unexamined Patent Application, Publication No. 2006-335049
{PTL 4} US patent application, Publication No. 2004/0069413.

### {Summary of Invention}

### {Technical Problem}

However, lamination of a sheet-like fiber-reinforced base material (hereinafter referred to as "reinforcement fabric") onto a large curved or bent mold is often performed manually, which takes much time for the laminating operation, thus causing the problem of reduced operating efficiency. This also causes a problem in that wrinkles etc. occur when the reinforcement fabric is laminated, thus causing variations in quality.

The invention disclosed in Patent Literature 1 laminates a roving material or a thread-like reinforcement fabric.

Patent Literature 2 discloses an apparatus that forms a reinforcement fabric into a tape and laminates the tape on a mold while pressure-contacting it with the mold by pressing the entire fiber width with a roller having the same width as the reinforcement fabric; however, a specific method for laminating a sheet-like reinforcement fabric is not disclosed.

Patent Literature 3 discloses a gate-shaped apparatus that laminates a reinforcement fabric on a mold; however, it has the problem of high installation cost because of the large-scale apparatus.

The present invention has been made in consideration of such circumstances and provides a reinforcement fabric laminating apparatus and a method for the same in which wrinkles that occur when a sheet-like reinforcement fabric is laminated on a curved or bent mold can be prevented, the workload can be reduced, and the operating efficiency can be improved.

### {Solution to Problem}

To solve the above problems, the reinforcement fabric laminating apparatus and the method for the same of the present invention adopt the following solutions.

A first aspect of the present invention is a reinforcement fabric laminating apparatus including a reinforcement fabric to be laminated on a mold, a sheet feeding unit that feeds out the reinforcement fabric , and a pressure contact unit that pressure-contacts the reinforcement fabric onto the mold, wherein the pressure contact unit has a narrower width than the reinforcement fabric, and the sheet feeding unit supplies the reinforcement fabric while applying tension between the sheet feeding unit and the pressure contact unit, and wherein the sheet feeding unit includes an adhesive supply unit that supplies an adhesive for bonding the reinforcement fabric and the mold together.

The reinforcement fabric laminating apparatus according to the first aspect of the present invention feeds out the reinforcement fabric to the mold while applying tension and pressure-contacts the reinforcement fabric onto the mold while maintaining the tension. Since the reinforcement fabric is pressure-contacted using the pressure contact unit that is smaller in width than the reinforcement fabric, the pressure contact part is restricted to a predetermined position of the mold, but a non-pressure-contact part of the reinforcement fabric is not restricted to the mold, and thus, the reinforcement fabric is deformed due to the tension between the sheet feeding unit and the pressure contact unit and is relatively displaced (shifts) in the tensile direction. Thus, even if the mold has a curved surface, the reinforcement fabric can be laminated on the mold so as to follow it without being wrinkled. Accordingly, the reinforcement fabric wider than the pressure contact unit can be laminated on the mold without being wrinkled.

The reinforcement fabric is a sheet-like fabric made of reinforced fibers, such as glass fibers or carbon fibers, and having a width of, for example, about 1 m. By laminating a reinforcement fabric on a mold with the reinforcement fabric laminating apparatus of the present invention, thereafter impregnating it with plastic using a VaRTM method or the like, and curing it, a composite (fiber-reinforced plastic) serving as a structural member is manufactured.

The reinforcement fabric laminating apparatus according to the first aspect of the present invention may have a configuration in which the pressure contact unit pressure-contacts the central portion of the reinforcement fabric.

With this configuration, the reinforcement fabric is fed out onto the mold while being subjected to tension, with the central portion pressure-contacted. The right and left (both sides) of the reinforcement fabric whose central portion is pressure-contacted are therefore uniformly subjected to force. This allows the right and left of the reinforcement fabric whose central portion is pressure-contacted to be laminated onto the mold without being wrinkled.

The reinforcement fabric laminating apparatus according to the first aspect of the present invention may have a configuration in which the tension of the reinforcement fabric fed out from the sheet feeding unit is generated due to frictional resistance of the sheet feeding unit.

With this configuration, the reinforcement fabric receives tension due to the frictional resistance of the reinforcement fabric feeding unit. This allows the tension of the reinforcement fabric to be generated without providing an additional mechanism for generating the tension. Accordingly, because the reinforcement fabric is fed out onto the mold while tension is generated therein and is pressure-contacted onto the mold by the pressure contact unit, the reinforcement fabric can be laminated onto the mold without being wrinkled.

"Frictional resistance" means, for example, resistance generated along with the motion of feeding out the reinforcement fabric, and if the reinforcement fabric feeding unit is composed of a fiber roll and a bearing that supports the core of the roll or a shaft passing through the core of the roll, the frictional resistance can be achieved by employing a bearing member in which sliding friction occurs on the bearing.

The reinforcement fabric laminating apparatus according to the first aspect of the present invention has a configuration in which the sheet feeding unit includes an adhesive supply unit that supplies an adhesive for bonding the reinforcement fabric and the mold together.

With this configuration, the reinforcement fabric laminating apparatus includes the adhesive supply unit. The reinforcement fabric laminating apparatus can therefore perform bonding of the reinforcement fabric onto the mold, as well as feeding, wrinkle smoothing, and pressure contacting. Thus, the efficiency of the reinforcement fabric laminating operation can be improved.

The reinforcement fabric laminating apparatus according to the first aspect of the present invention may have a configuration in which the mold is for forming a large fiber-reinforced plastic product, such as a wind turbine blade, by laminating the reinforcement fabric thereon; the sheet feeding unit includes a handle; and the pressure contact unit includes a pressure contact roller and a driving unit that drives the pressure contact roller.

With this configuration, the reinforcement fabric laminating apparatus is provided with the pressure contact roller and the driving unit that drives the pressure contact roller and can be moved under manual control by operating the handle. The operation of laminating the reinforcement fabric onto the mold can be therefore performed with the simple reinforcement fabric laminating apparatus. This allows the operation of laminating the reinforcement fabric for forming a wind turbine blade, which has been performed manually by a large number of persons, to be performed by a small number of persons, thus allowing reduction in labor costs and improvement in operating efficiency.

The reinforcement fabric laminating apparatus according to the first aspect of the present invention may include an auxiliary pressure contact unit that pushes the reinforcement fabric onto the mold.

With this configuration, a larger area of the reinforcement fabric is pressure-contacted onto the mold by the auxiliary pressure contact unit. The pressure contact force of the auxiliary pressure contact unit is set smaller than the pressure contact force of the pressure contact unit, which needs only prevent the reinforcement fabric from peeling off from the top side of the mold. This can therefore prevent the reinforcement fabric from peeling off from the top side of the mold, thus allowing the fibers to be laminated on a more complicated curved surface without being wrinkled.

The reinforcement fabric laminating apparatus according to the first aspect of the present invention may include a movable unit to which the sheet feeding unit and the pressure contact unit are connected, wherein the movable unit may be moved along the longitudinal direction of the mold and can freely move the sheet feeding unit and the pressure contact unit in the widthwise direction of the mold and in a vertical direction perpendicular to the longitudinal direction and the widthwise direction of the mold.

With this configuration, the sheet feeding unit and the pressure contact unit can be freely moved in the longitudinal direction of the mold and in the vertical direction perpendicular to the longitudinal direction and the widthwise direction of the mold. This allows the pressure contact unit to be freely moved on the mold by moving the movable unit even if the reinforcement fabric is laminated on the curved or bent mold. Accordingly, the reinforcement fabric can be laminated on even the curved or bent mold without the pressure contact unit being separated from the top side of the mold.

By moving the movable unit, the sheet feeding unit and the pressure contact unit can be moved in the vertical direction perpendicular to the longitudinal direction and the widthwise direction of the mold during replacement of the fiber-reinforced sheet feeding means and the fiber-reinforced sheet roll and maintenance of the pressure contact unit. This facilitates replacement of the fiber-reinforced sheet feeding means and the fiber-reinforced sheet roll and maintenance of the pressure contact unit

Furthermore, since the sheet feeding unit and the pressure contact unit can be continuously moved in the longitudinal direction of the mold, the reinforcement fabric can easily be laminated on a mold of a large member.

A second aspect of the present invention is a laminating method according to claim 7 for a reinforcement fabric laminating apparatus having a sheet feeding unit that feeds out a reinforcement fabric to be laminated on a mold and a pressure contact unit that pressure-contacts the reinforcement fabric onto the mold, wherein the pressure contact unit has a narrower width than the reinforcement fabric, and the sheet feeding unit supplies the reinforcement fabric while applying tension between the sheet feeding unit and the pressure contact unit, and wherein the method comprises supplying an adhesive by an adhesive supply unit of the sheet feeding unit, for bonding the reinforcement fabric and the mold together.

### {Advantageous Effects of Invention}

The reinforcement fabric laminating apparatus according to the present invention feeds out a reinforcement fabric onto a mold while applying tension and pressure-contacts the reinforcement fabric onto the mold while maintaining the tension. Since the reinforcement fabric is pressure-contacted using the pressure contact unit that is smaller in width than the reinforcement fabric, a non-pressure-contact part of the reinforcement fabric is deformed due to the tension between the sheet feeding unit and the pressure contact unit and is relatively displaced in the tensile direction. Thus, even if the top side of the mold has a curved surface, the reinforcement fabric can be laminated on the mold. Accordingly, the reinforcement fabric wider than the pressure contact unit can be laminated on the mold without being wrinkled.

### {Brief Description of Drawings}

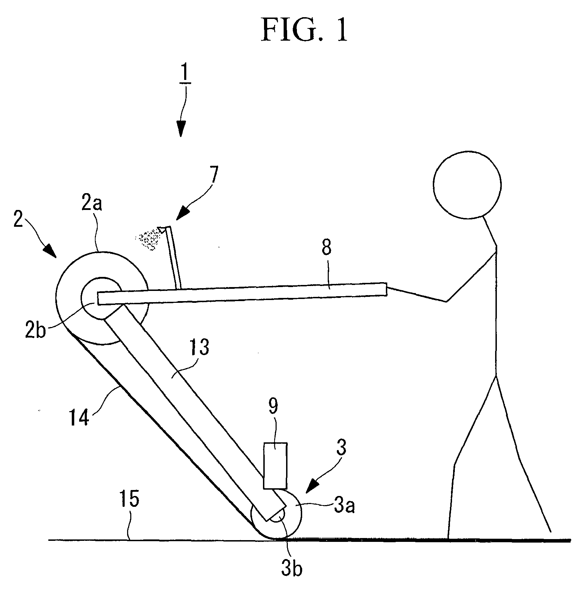

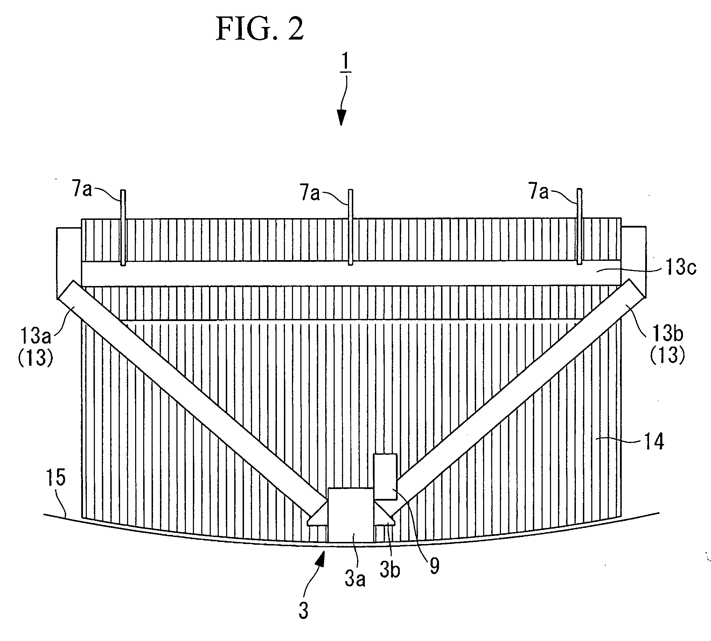

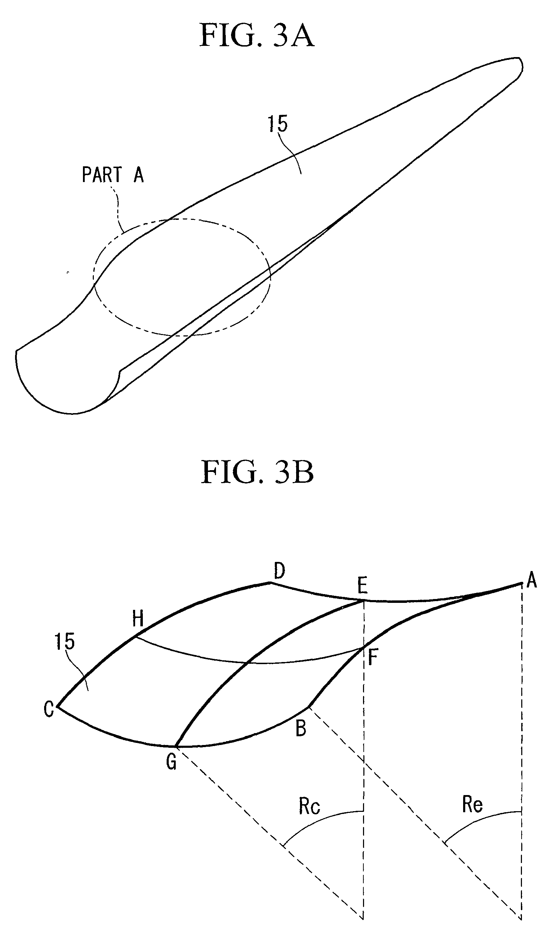

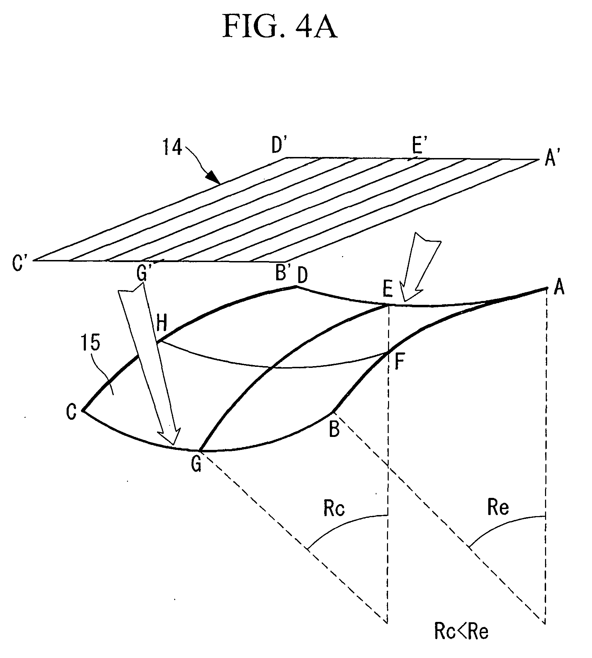

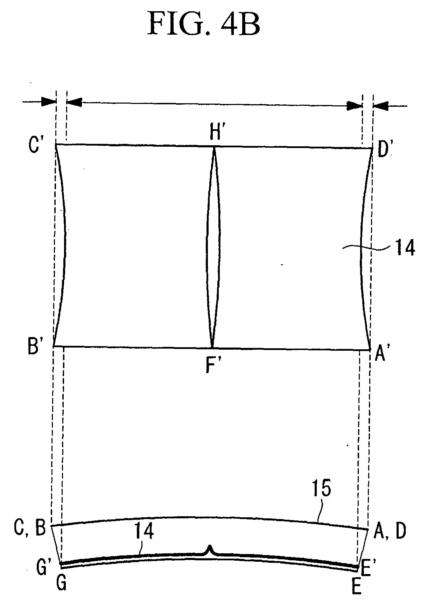

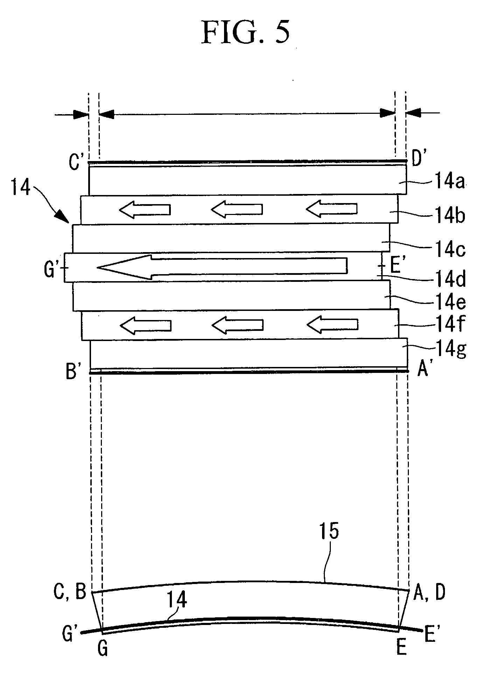

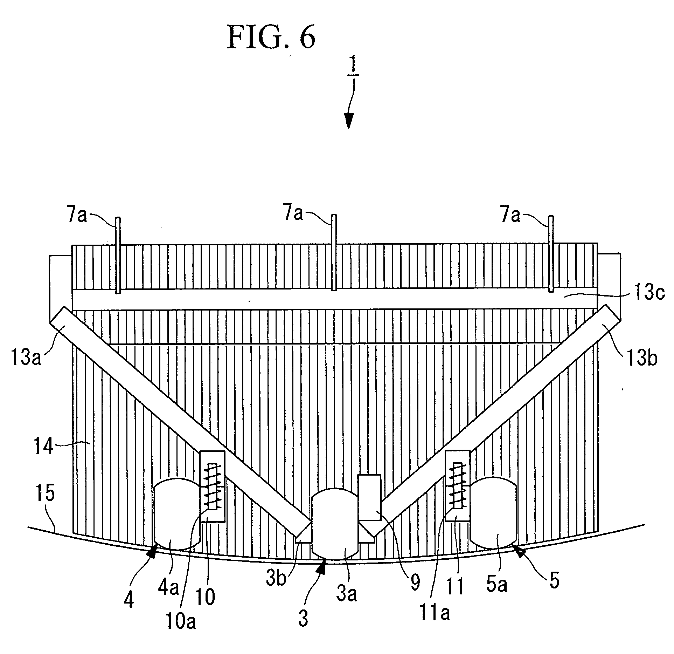

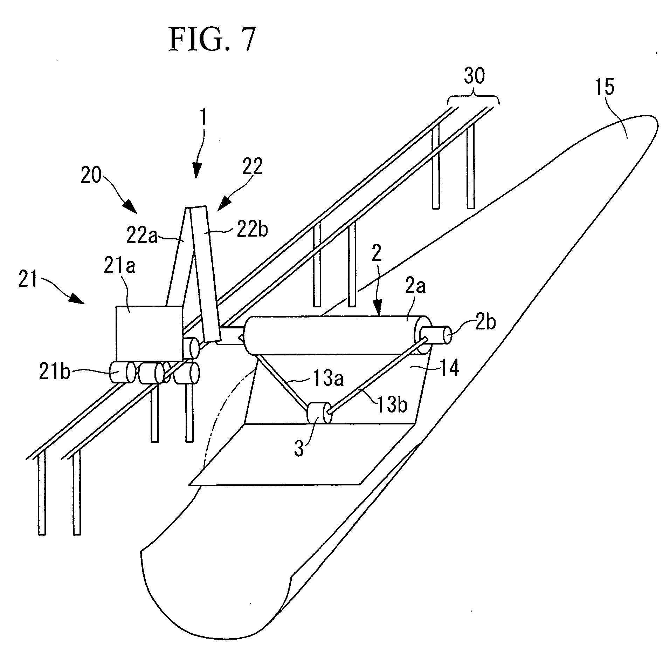

{Fig. 1} Fig. 1 is a side view of a reinforcement fabric laminating apparatus according to a first embodiment of the present invention.
{Fig. 2} Fig. 2 is a front view of the reinforcement fabric laminating apparatus shown in Fig. 1.
{Fig. 3A} Fig. 3A is a perspective view of a mold according to the first embodiment.
{Fig. 3B} Fig. 3B is a partial enlarged diagram of part A shown in Fig. 3A.
{Fig. 4A} Fig. 4A is a partial enlarged perspective view of the reinforcement fabric and the mold shown in Fig. 1.
{Fig. 4B} Fig. 4B shows, in the upper diagram, a partial enlarged plan view of the reinforcement fabric and the mold shown in Fig. 1, and in the lower diagram, a side view in which the reinforcement fabric is laminated on the arc formed on the mold.
{Fig. 5} Fig. 5 shows the reinforcement fabric, in which the upper diagram is a plan view of the reinforcement fabric, and the lower diagram is a side view thereof.
{Fig. 6} Fig. 6 is a front view of a reinforcement fabric laminating apparatus according to a second embodiment of the present invention.
{Fig. 7} Fig. 7 is a perspective view of a reinforcement fabric laminating apparatus according to a third embodiment of the present invention.

### {Description of Embodiments}

### {First Embodiment}

A reinforcement fabric laminating apparatus according to a first embodiment of the present invention will be described on the basis of Figs. 1 and 2.

A reinforcement fabric laminating apparatus 1 according to this embodiment includes a sheet feeding mechanism (sheet feeding unit) 2 and a pressure contact roller (pressure contact unit) 3 that pressure-contacts a reinforcement fabric 14 fed out from the sheet feeding mechanism 2 onto an airfoil (mold) 15.

The sheet feeding mechanism 2 includes a sheet roll 2a and a roll shaft 2b. The roll shaft 2b passes through the center of the sheet roll 2a. The sheet roll 2a is formed such that a reinforcement fabric 14 fed out is wound therearound. The reinforcement fabric 14 is wound so that the direction of the fibers coincides with the longitudinal direction of the airfoil 15, that is, in the feeding direction.

The pressure contact roller 3 includes a pressure contact roller portion 3a and a pressure contact roller shaft 3b. The pressure contact roller portion 3a pressure-contacts the reinforcement fabric 14 to be fed out from the sheet roll 2a onto the airfoil 15. The pressure contact roller shaft 3b passes through the center of the pressure contact roller portion 3a. The pressure contact roller portion 3a and the pressure contact roller shaft 3b are narrower than the sheet roll 2a, that is, the width of the reinforcement fabric 14. The airfoil 15 is weighted by the pressure contact roller 3 and the sheet feeding mechanism 2 etc. located above the pressure contact roller 3 via the pressure contact roller portion 3a. Due to the weight applied via the pressure contact roller portion 3a, the reinforcement fabric 14 fed out from the sheet roll 2a is pressure-contacted onto the airfoil 15.

A motor (driving unit) 9 is provided at one end of the pressure contact roller shaft 3b. The motor 9 is a driving source that rotationally drives the pressure contact roller shaft 3b. The pressure contact roller portion 3a is rotated by the pressure contact roller shaft 3b being rotationally driven.

The sheet feeding mechanism 2 is supported from below by two frames 13a and 13b. Ends of the frames 13a and 13b (in Fig. 2, the upper ends) are connected to both ends of the roll shaft 2b (see Fig. 1) of the sheet feeding mechanism. The other ends of the frames 13a and 13b (in Fig. 2, the lower ends) are connected to both ends of the pressure contact roller shaft 3b. The frames 13a and 13b extend from the roll shaft 2b of the sheet feeding mechanism 2 diagonally downwards to the pressure contact roller shaft 3b. Because the width of the pressure contact roller shaft 3b is smaller than the width of the roll shaft 2b of the sheet feeding mechanism 2, the distance between the two frames 13a and 13b decreases gradually from the roll shaft 2b to the pressure contact roller shaft 3b, as shown in Fig. 2. In this embodiment, this allows the pressure contact roller 3 to pressure-contact the central portion of the reinforcement fabric 14. Furthermore, the frame 13c for supplying an adhesive is connected to both ends of the roll shaft 2b of the sheet feeding mechanism 2 so as to be parallel to the roll shaft 2b. The frame 13c for supplying an adhesive is provided in the vicinity of the sheet roll 2a.

Two handles 8 (see Fig. 1) extend from both ends of the roll shaft 2b so as to be parallel to the top side of the airfoil 15 and parallel to each other when an operator grips grippers. The grippers that the operator grips are provided at the other ends of the handles 8 (in Fig. 1, the right ends). The handles 8 and the frames 13 are connected so as to for an acute angle when viewed from the side, as shown in Fig. 1.

An adhesive supply unit 7 includes an adhesive spray nozzle 7a and an adhesive supply tank (not shown). The adhesive supply tank is accommodated in, for example, the adhesive supply frame 13c. The adhesive spray nozzle 7a is provided at one or a plurality of (in this embodiment, three) locations on the adhesive supply frame 13c. Since the adhesive supply frame 13c and the adhesive supply unit 7 are provided in the vicinity of the sheet roll 2a, the adhesive can be sprayed onto the surface of the sheet roll 2a.

The airfoil 15 (see Figs. 3A and 3B) used in this embodiment is shaped in the form of a blade (not shown) of a wind turbine (not shown). The mold 15 of a wind turbine blade is divided, with the leading edge and the trailing edge of the blade as a dividing line, into two, that is, the front, which is a wind receiving surface, and the back, which is opposite thereto. The airfoil 15 in Fig. 3A is a rear-side airfoil 15.

The reinforcement fabric 14 is laminated on the airfoil 15 by the reinforcement fabric laminating apparatus 1 according to this embodiment, is then impregnated with plastic using a VaRTM method or the like, and is cured. Thus, composites (fiber-reinforced plastic) for the front and back of the blade are formed. The blade is formed by combining the front and back composites manufactured in this way.

The rear-side airfoil 15 shown in Fig. 3A is placed with a surface on which the reinforcement fabric 14 (see Fig. 1) is laminated facing up. The airfoil 15 extends in the longitudinal direction thereof and curves in a concave shape (downwardly convex shape) in the widthwise direction of the airfoil 15 (in a chord direction in a blade section). Furthermore, as shown in Fig. 3B, which is a partial enlarged diagram of part A in Fig. 3A, the part of the surface of the airfoil 15 on which the reinforcement fabric 14 is laminated has a saddle shape (non-Euclidean) having a convex shape in the longitudinal direction of the airfoil 15 and a concave shape in the widthwise direction of the airfoil 15. In other words, the surface of the airfoil 15 on which the reinforcement fabric 14 is laminated is shaped so that arcs AB, EG, and DC formed in the longitudinal direction of the airfoil 15 form upwardly convex arcs, and arcs AD, FH, and BC formed in the widthwise direction of the airfoil 15 form concave arcs. Therefore, a surface ABCD formed by connecting the ends A, B, C, and D of the individual arcs forms a concave shape as a whole. The arcs AB and DC and the arc EG are shaped such that the radius Rc of the arc EG is smaller than the radii Re of the arcs AB and DC.

Figs. 4A and 4B show the principle in which the reinforcement fabric 14 is wrinkled when the flat reinforcement fabric 14 is pressure-contacted with the saddle-shaped airfoil 15 with the fiber direction is aligned with the longitudinal direction of the airfoil 15.

As shown in Fig. 4A, the longitudinal direction of the airfoil 15 and the fiber direction of the reinforcement fabric 14 are set in the same direction. The reinforcement fabric 14 are laminated so as to be simply pressed from directly above so that two sides A'D' and B'C' of the reinforcement fabric 14 are aligned with the arcs AD and BC that are in the widthwise direction of the airfoil 15.

When the airfoil 15 and the reinforcement fabric 14 in Fig. 4A are viewed from the side, the surface ABCD of the airfoil 15 (see Fig. 4A) is formed of arcs that are concave from the arcs AB and DC toward the arc EG, as shown in the lower diagram in Fig. 4B. Therefore, when the airfoil 15 is viewed from the side, the arc EG is located below the arcs AB and DC. The arc length EG is shorter than the arc lengths AB and DC. The lengths of arcs in the longitudinal direction that form the surface ABCD of the airfoil 15 (see Fig. 4A) increase from the arc length EG toward the arc length AB or DC. On the other hand, since a surface A'B'C'D' of the reinforcement fabric 14 has a planar shape, the lengths of two sides A'B' and D'C' thereof and the length of a central portion E'G' in the longitudinal direction that connects the midpoints E' and G' of the two sides A'D' and B'C' are equal.

Consequently, the central portion E'G' in the longitudinal direction of the reinforcement fabric 14 is longer than the arc length EG of the airfoil 15. Therefore, when the reinforcement fabric 14 is laminated on the airfoil 15 in such a manner that the two sides A'D' and B'C' are aligned with the arcs AD and BC of the airfoil 15, wrinkles occur in the vicinity of the widthwise central portion F'H' that connects the respective midpoints F' and H' of the two sides A'B' and D'C' of the reinforcement fabric 14, as shown in the upper diagram of Fig. 4B. This is because the lengths of the longitudinal arcs that form the surface ABCD of the airfoil 15 (see Fig. 4A) increase from the arc EG toward the arcs AB and DC, as described above. The wrinkles that occur in the vicinity of the widthwise central portion F'H' of the reinforcement fabric 14 decrease with an increasing distance to the side A'B' (see Fig. 4B) or the side D'C' (see Fig. 4B) of the reinforcement fabric 14.

Fig. 5 shows the reinforcement fabric 14. In Fig. 5, the upper diagram is a plan view of the reinforcement fabric 14, and the lower diagram is a side view thereof. Fig. 5 shows a state in which the reinforcement fabric 14 shifts in the fiber direction (longitudinal direction).

The reinforcement fabric 14 is a fabric in which continuous fiber bundles 14a, 14b, 14c, ... made of, for example, about 5-mm wide glass fibers or carbon fibers, are arrayed in parallel along the longitudinal direction of the airfoil 15 (see Figs. 3A and 3B) and which has a width of about 1 m. Because the reinforcement fabric has high elasticity, the reinforcement fabric 14 has the characteristic of not being stretched in the longitudinal direction by an acting force generated due to a pressure contact force during lamination.

On the other hand, as shown in the upper diagram of Fig. 5, if the central portion of the reinforcement fabric 14 is pressure-contacted, so that a force in the longitudinal direction of the airfoil 15 (see Figs. 3A and 3B) is applied thereto, the continuous fiber bundles 14c and 14e on which no pressure contact force is exerted are drawn by tension exerted on the reinforcement fabric 14, relative to the central continuous fiber bundle 14d on which the pressure contact force is exerted, the reinforcement fabric 14 can be shifted in the longitudinal direction of the airfoil 15 (see Figs. 3A and 3B). Using this characteristic allows the reinforcement fabric 14 to be laminated on the saddle-shaped airfoil 15 (see Figs. 3A and 3B) without being wrinkled.

If the reinforcement fabric 14 is pressure-contacted from one end at the center along the longitudinal direction, the fibers shift in the pressure contact direction; therefore, the wrinkles of the reinforcement fabric 14, which would have occurred if the reinforcement fabric 14 is pressed simply from above (see Figs. 4A and 4B), do not occur, as shown in the side view of the lower diagram of Fig. 5.

Next, a lamination method for the reinforcement fabric laminating apparatus 1, shown in Figs. 1 and 2, will be described.

The reinforcement fabric laminating apparatus 1 is manually operated. The operator grips the grippers of the handles 8 and moves the reinforcement fabric laminating apparatus 1 so as to push it in the longitudinal direction of the airfoil 15. The motor 9 is activated to rotationally drive the pressure contact roller shaft 3b. Thus, as the operator moves the reinforcement fabric laminating apparatus 1 so as to push it in the longitudinal direction of the airfoil 15, the pressure contact roller portion 3a rotates on the airfoil 15. Thus, the reinforcement fabric laminating apparatus 1 can move on the airfoil 15.

As the reinforcement fabric laminating apparatus 1 moves on the airfoil 15, the roll shaft 2b rotates, so that the reinforcement fabric 14 is fed out from the sheet roll 2a to the pressure contact roller 3 while being subjected to tension. The tension of the reinforcement fabric 14 fed out from the sheet roll 2a to the pressure contact roller 3 is generated due to frictional resistance during the rotation of the roll shaft 2b. The frictional resistance during the rotation of the roll shaft 2b is generated by omitting a rolling bearing or the like that stabilizes the rotation at the joint portions between the roll shaft 2b and the frames 13a and 13b and by employing a slide bearing that causes a sliding frictional force.

When the sheet roll 2a rotates, an adhesive is sprayed by the adhesive supply unit 7 onto the surface of the reinforcement fabric 14 wound around the sheet roll 2a. The central portion of the reinforcement fabric 14 that is fed out from the sheet roll 2a is pressure-contacted and bonded to the airfoil 15 by the pressure contact roller 3.

As described above, the reinforcement fabric laminating apparatus 1 according to this embodiment has the following operational advantages.

The reinforcement fabric laminating apparatus 1 feeds out the reinforcement fabric 14 to the airfoil 15 while applying tension and pressure-contacts the reinforcement fabric 14 with the airfoil 15 while maintaining the tension. Since the reinforcement fabric 14 is pressure-contacted using the pressure contact roller 3 that is smaller in width than the reinforcement fabric 14, the pressure contact part is restricted to a predetermined position of the airfoil 15, but a non-pressure-contact part of the reinforcement fabric 14 is not restricted to the airfoil 15, and thus, the reinforcement fabric is deformed due to the tension between the sheet feeding mechanism 2 and the pressure contact roller 3 and is relatively displaced (shifts) in the tensile direction. Thus, even if the top side of the airfoil 15 has a curved surface, the reinforcement fabric 14 can be laminated on the airfoil 15 so as to follow it without wrinkles. Accordingly, the reinforcement fabric 14 wider than the pressure contact roller 3 can be laminated on the airfoil 15 without being wrinkled.

The reinforcement fabric 14 receives tension due to the frictional resistance between the roll shaft 2b of the sheet feeding mechanism 2 and a bearing. This allows the tension to be generated in the reinforcement fabric 14 without providing an additional mechanism for generating the tension. Accordingly, because the reinforcement fabric 14 is fed out onto the airfoil 15 while tension is generated therein with the simple reinforcement fabric laminating apparatus 1 and is pressure-contacted onto the airfoil 15 by the pressure contact roller 3, the reinforcement fabric 14 can be laminated onto the airfoil 15 with the simple reinforcement fabric laminating apparatus 1 without being wrinkled.

The reinforcement fabric 14 is fed out onto the airfoil 15 while being subjected to tension, with the central portion pressure-contacted. The right and left (both sides) of the reinforcement fabric 14 whose central portion is pressure-contacted are therefore uniformly subjected to force. This allows the right and left of the reinforcement fabric 14 whose central portion is pressure-contacted to be laminated onto the airfoil 15 without being wrinkled.

The reinforcement fabric laminating apparatus 1 includes the adhesive supply unit 7. The reinforcement fabric laminating apparatus 1 can therefore perform bonding of the reinforcement fabric 14 onto the airfoil 15, as well as feeding, wrinkle smoothing, and pressure contacting. Thus, the efficiency of the reinforcement fabric laminating operation can be improved.

Since the fiber direction of the reinforcement fabric 14 is aligned with the longitudinal direction of the airfoil 15, when the reinforcement fabric 14 is pressure-contacted, the pressure-contacted fiber 14d (see the upper diagram in Fig. 5) does not extend in the longitudinal direction, but the fibers 14c and 14e around it (see the upper diagram in Fig. 5) are not restricted in the longitudinal direction, and is displaced in the longitudinal direction due to the tension and is thus shifted.

The reinforcement fabric laminating apparatus 1 is provided with the pressure contact roller portion 3a and the motor 9 that drives the pressure contact roller portion 3a and can be moved under manual control by operating the handles 8. The apparatus does not need a complicated control mechanism, and the operation of laminating the reinforcement fabric 14 onto the airfoil 15 can be performed by the simple reinforcement fabric laminating apparatus 1. This allows the operation of laminating the reinforcement fabric 14 for forming a wind turbine blade to be performed with a small number of persons, as compared with the known manual laminating operation, thus allowing reduction in labor costs and improvement in operating efficiency.

Although this embodiment has been described as applied to the case where the tension of the reinforcement fabric 14 is caused by the frictional resistance between the roll shaft 2b and the frames 13a and 13b during rotation, the present invention is not limited thereto; a mechanism for mechanically controlling frictional resistance may be provided if strict tension control is necessary.

Although this embodiment has been described as applied to the case where the airfoil 15 for forming a wind turbine blade is used as a mold, the present invention is not limited thereto; any curved or bent mold may be used. Examples of a reinforcement fabric laminated on such molds include glass fibers and carbon fibers.

### {Second Embodiment}

A second embodiment of the present invention will be described hereinbelow. The configuration of a reinforcement fabric laminating apparatus and a laminating method of this embodiment differ from the first embodiment in that auxiliary pressure contact means is provided; the other features are the same. Accordingly, the same configurations and laminating method are given the same reference signs, and descriptions thereof will be omitted.

Fig. 6 shows that the reinforcement fabric laminating apparatus 1 shown in Fig. 1 is provided with auxiliary pressure contact units 4 and 5.

The auxiliary pressure contact rollers (auxiliary pressure contact units) 4 and 5 are provided at a plurality of (for example, two) locations. The auxiliary pressure contact rollers 4 and 5 include auxiliary pressure contact roller portions 4a and 5a and auxiliary pressure contact roller shafts (not shown), respectively.

Ends of the auxiliary pressure contact roller shafts are connected to members 10 and 11 extending downwards from the frames 13a and 13b, respectively. The members 10 and 11 are provided with springs 10a and 11a, respectively.

The auxiliary pressure contact roller shafts connected to the members 10 and 11 extending downwards from the frames 13a and 13b pass through the centers of the auxiliary pressure contact roller portions 4a and 5a, respectively. The auxiliary pressure contact rollers 4 and 5 are provided at both sides of the pressure contact roller 3 so as to be equally spaced in a line in the widthwise direction of the airfoil 15, with the pressure contact roller 3 therebetween. The auxiliary pressure contact rollers 4 and 5 push the reinforcement fabric 14 onto the airfoil 15 so that the reinforcement fabric 14 does not peel off from the top side of the airfoil 15.

The pressure with which the auxiliary pressure contact rollers 4 and 5 push the reinforcement fabric 14 onto the airfoil 15 need only press the reinforcement fabric 14 to prevent it from rising and is set smaller than the pressure contact force applied by the pressure contact roller 3 for pushing and fixing the reinforcement fabric 14 onto the airfoil 15. Specifically, the pressure can be adjusted with the springs 10a and 11a provided in the members 10 and 11 extending downwards from the frames 13a and 13b.

The reinforcement fabric laminating apparatus 1 pressure-contacts the central portion of the reinforcement fabric 14 in the longitudinal direction of the airfoil 15 with the pressure contact roller 3 and pushes fibers around the contact-pressed fibers in the longitudinal direction of the airfoil 15 with the auxiliary pressure contact rollers 4 and 5 so as to prevent them from peeling off from the top side of the airfoil 15.

As described above, the reinforcement fabric laminating apparatus 1 according to this embodiment provides the following operational advantages.

The reinforcement fabric 14 is pushed onto the airfoil 15 by the auxiliary pressure contact rollers 4 and 5. Accordingly, this can prevent the reinforcement fabric 14 from peeling off from the top side of the airfoil 15.

Although this embodiment has been described as applied to the case where the auxiliary pressure contact rollers 4 and 5 are provided in a line in the widthwise direction of the airfoil 15, with the pressure contact roller 3 therebetween, the present invention is not limited thereto; the auxiliary pressure contact rollers 4 and 5 may also be provided below the frames 13a and 13b so as to be parallel to the frames 13a and 13b; they may be disposed to suit the shape of the mold or the kind and shape of the fibers.

### {Third Embodiment}

A third embodiment of the present invention will be described hereinbelow. The configuration of a reinforcement fabric laminating apparatus and a laminating method of this embodiment differ from the first embodiment in that a movable unit is provided and that the movable unit is moved along the longitudinal direction of the airfoil and are the same in the others. Accordingly, the same configurations and laminating method are given the same reference signs, and descriptions thereof will be omitted.

Fig. 7 shows that the reinforcement fabric laminating apparatus 1 shown in Fig. 1 is provided with a movable unit 20, and the movable unit 20 moves on a rail 30 along the longitudinal direction of the airfoil 15.

The arm unit (movable unit) 20 includes a base 21 to which an arm 22 is connected and the arm 22 equipped with the sheet feeding mechanism 2 and the pressure contact roller 3.

The base 21 includes a base portion 21a, running rollers 21b, and a motor (not shown). The running rollers 21b rotate on the rail 30, which is installed in a factory. The base portion 21a is provided with the motor and a coupling portion (not shown, hereinafter referred to as a first coupling portion). The arm 22 is connected to the first coupling portion of the base portion 21a. The first coupling portion allows the arm 22 to move freely in the widthwise direction of the airfoil 15. The motor provided at the base portion 21a is a power source for moving the arm 22. The motor moves the arm 22 freely in the widthwise direction of the airfoil 15 using the first coupling portion and in the vertical direction perpendicular to the longitudinal direction and the widthwise direction of the airfoil 15 (in the vertical direction in Fig. 7) using a second coupling portion, described later.

The arm 22 includes two members 22a and 22b and the coupling portion (now shown, hereinafter referred to as a second coupling portion). Ends of the members 22a and 22b are connected by the second coupling portion. One member 22b of the arm 22 is movable relative to the other member 22a using the second coupling portion, so that the arm 22 can be freely moved in the vertical direction perpendicular to the longitudinal direction and the widthwise direction of the airfoil 15 (in the vertical direction in Fig. 7). The other end of the member 22b is connected to the roll shaft 2b. Thus, the arm 22 cantilevers the sheet feeding mechanism 2 and the pressure contact roller 3.

Next, a laminating method for the reinforcement fabric laminating apparatus 1 according to this embodiment will be described.

The reinforcement fabric laminating apparatus 1 equipped with the arm unit 20 is placed on the rail 30, which is installed in a factory. The airfoil 15 is disposed in the vicinity of the rail 30 in such a manner that the direction in which the rail 30 extends and the longitudinal direction of the airfoil 15 are aligned. The airfoil 15 is installed with the laminated surface face up. The reinforcement fabric laminating apparatus 1 is moved on the rail 30 in the longitudinal direction on the airfoil 15 by the operator. As the reinforcement fabric laminating apparatus 1 moves on the rail 30, the reinforcement fabric 14 is fed out by the sheet feeding mechanism 2 provided in the arm unit 20. The fed out reinforcement fabric 14 is pressure-contacted and bonded onto the airfoil 15 by the roller 3. By moving the arm 22 with the motor provided at the arm unit 20, the reinforcement fabric 14 and the pressure contact roller 3 can be moved to any position on the airfoil 15 in the widthwise direction.

As described above, the reinforcement fabric laminating apparatus 1 according to this embodiment provides the following operational advantages.

The sheet feeding mechanism 2 and the pressure contact roller 3 can be freely moved in the longitudinal direction of the airfoil 15 and in the vertical direction perpendicular to the longitudinal direction and the widthwise direction of the airfoil 15 (in the vertical direction in Fig. 7). This allows the pressure contact roller 3 to be pressure-contacted onto the airfoil 15 by moving the arm unit 20 even if the reinforcement fabric 14 is laminated on the curved or bent airfoil 15. Accordingly, the reinforcement fabric 14 can be laminated on even the curved or bent airfoil 15 without the pressure contact roller 3 being separated from the top side of the airfoil 15.

Since the sheet feeding mechanism 2 and the pressure contact roller 3 can be moved in the vertical direction perpendicular to the longitudinal direction and the widthwise direction of the airfoil 15 (in the vertical direction in Fig. 7) during replacement of the fiber-reinforced sheet roll and maintenance of the sheet feeding mechanism 2 and the pressure contact roller 3 by moving the arm unit 20, these operations can be simplified.

Furthermore, since the sheet feeding mechanism 2 and the pressure contact roller 3 can be continuously moved in the longitudinal direction of the airfoil 15, the reinforcement fabric 14 can easily be laminated on the large airfoil 15.

While this embodiment has been described as applied to the case where the reinforcement fabric laminating apparatus 1 is manually moved on the rail 30, the present invention is not limited thereto; the reinforcement fabric laminating apparatus 1 may be moved on the rail 30 by driving means, such as a motor.

While the arm 22 that cantilevers the sheet feeding mechanism 2 and the pressure contact roller 3 has been described, an additional frame may be provided to support the central position of the pressure contact roller 3.

Furthermore, the pressure contact roller 3 may be supported not only in a horizontal position but also in a tilted position, depending on the shape of the airfoil 15, thereby improving the workability.

### {Reference Signs List}

1 reinforcement fabric laminating apparatus
2 sheet feeding unit (sheet feeding mechanism)
3 pressure contact unit (pressure contact roller)
14 reinforcement fabric
15 mold (airfoil)

## Claims

1. A reinforcement fabric laminating apparatus comprising:
a reinforcement fabric (14) to be laminated on a mold (15);
a sheet feeding unit (2) that feeds out the reinforcement fabric (14); and
a pressure contact unit (3) that pressure-contacts the reinforcement fabric onto the mold,
wherein the pressure contact unit has a narrower width than the reinforcement fabric, and
the sheet feeding unit supplies the reinforcement fabric while applying tension between the sheet feeding unit and the pressure contact unit, **characterized in that**
the sheet feeding unit (2) includes an adhesive supply unit (7) that supplies an adhesive for bonding the reinforcement fabric (14) and the mold (15) together.

2. The reinforcement fabric laminating apparatus according to Claim 1, wherein the pressure contact unit (3) pressure-contacts the central portion of the reinforcement fabric (14).

3. The reinforcement fabric laminating apparatus according to Claim 1 or 2, wherein the tension of the reinforcement fabric (14) fed out from the sheet feeding unit (2) is generated due to frictional resistance of the sheet feeding unit.

4. The reinforcement fabric laminating apparatus according to any one of Claims 1 to 3, wherein
the mold (15) is for forming a large fiber-reinforced plastic product, such as a wind turbine blade, by laminating the reinforcement fabric (14) thereon;
the sheet feeding unit (2) includes a handle (8); and the pressure contact unit (3) includes a pressure contact roller (3) and a driving unit (9) that drives the pressure contact roller.

5. The reinforcement fabric laminating apparatus according to any one of Claims 1 to 4, comprising an auxiliary pressure contact unit (4,5) that pushes the reinforcement fabric (14) onto the mold.

6. The reinforcement fabric laminating apparatus according to any of Claims 1 to 5, comprising a movable unit (20) to which the sheet feeding unit (2) and the pressure contact unit (3) are connected,
wherein the movable unit (20) is moved along the longitudinal direction of the mold (15) and can freely move the sheet feeding unit (2) and the pressure contact unit (3) in the widthwise direction of the mold and in a vertical direction perpendicular to the longitudinal direction and the widthwise direction of the mold.

7. A laminating method using the reinforcement fabric laminating apparatus according to any one of claims 1 to 6.

## Patentansprüche

1. Verstärkungsgewebe-Laminiervorrichtung, umfassend:
ein Verstärkungsgewebe (14), das auf eine Form (15) laminiert werden soll,
eine Bahnzuführeinheit (2), die das Verstärkungsgewebe (14) ausgibt, und
eine Druckkontakteinheit (3), die das Verstärkungsgewebe mit der Form in Druckkontakt bringt,
wobei die Druckkontakteinheit eine geringere Breite als das Verstärkungsgewebe aufweist und
die Bahnzuführeinheit das Verstärkungsgewebe zuführt, während eine Zugkraft zwischen der Bahnzuführeinheit und der Druckkontakteinheit angelegt wird, **dadurch gekennzeichnet, dass**
die Bahnzuführeinheit (2) eine Klebstoffzufuhreinheit (7) aufweist, die einen Klebstoff zuführt, um das Verstärkungsgewebe (14) und die Form (15) aneinander zu bonden.

2. Verstärkungsgewebe-Laminiervorrichtung nach Anspruch 1, wobei die Druckkontakteinheit (3) mit dem zentralen Abschnitt des Verstärkungsgewebes (14) Druckkontakt steht.

3. Verstärkungsgewebe-Laminiervorrichtung nach Anspruch 1 oder 2, wobei die Zugkraft des Verstärkungsgewebes (14), das aus der Bahnzuführeinheit (2) ausgegeben wird, aufgrund eines Reibungswiderstands der Bahnzuführeinheit erzeugt wird.

4. Verstärkungsgewebe-Laminiervorrichtung nach einem der Ansprüche 1 bis 3, wobei
die Form (15) zum Bilden eines großen faserverstärkten Kunststoffprodukts wie einer Windturbinenschaufel durch Laminieren des Verstärkungsgewebes (14) darauf dient,
die Bahnzuführeinheit (2) einen Griff (8) aufweist und die Druckkontakteinheit (3) eine Druckkontaktrolle (3) und eine Antriebseinheit (9) aufweist, die die Druckkontaktrolle antreibt.

5. Verstärkungsgewebe-Laminiervorrichtung nach einem der Ansprüche 1 bis 4, umfassend eine Druckkontakt-Hilfseinheit (4, 5), die das Verstärkungsgewebe (14) auf die Form schiebt.

6. Verstärkungsgewebe-Laminiervorrichtung nach einem der Ansprüche 1 bis 5, umfassend eine bewegliche Einheit (20), mit der die Bahnzuführeinheit (2) und die Druckkontakteinheit (3) verbunden sind,
wobei die bewegliche Einheit (20) entlang der Längsrichtung der Form (15) bewegt wird und die Bahnzuführeinheit (2) und die Druckkontakteinheit (3) in der Breitenrichtung der Form und in einer vertikalen Richtung, die zu der Längsrichtung und der Breitenrichtung senkrecht ist, frei bewegen kann.

7. Laminierverfahren, das die Verstärkungsgewebe-Laminiervorrichtung nach einem der Ansprüche 1 bis 6 verwendet.

## Revendications

1. Appareil de laminage de tissu de renfort comportant :
un tissu de renfort (14) devant être laminé sur un moule (15) ;
une unité d'alimentation de feuille (2) qui délivre le tissu de renfort (14) ; et
une unité de contact par pression (3) qui met le tissu de renfort en contact par pression sur le moule,
dans lequel l'unité de contact de pression a une largeur plus étroite que le tissu de renfort, et
l'unité d'alimentation de feuille délivre le tissu de renfort tout en appliquant une tension entre l'unité d'alimentation de feuille et l'unité de contact par pression, **caractérisé en ce que**
l'unité d'alimentation de feuille (2) comprend une unité d'alimentation en adhésif (7) qui délivre un adhésif pour coller le tissu de renfort (14) et le moule (15) ensemble.

2. Appareil de laminage de tissu de renfort selon la revendication 1, dans lequel l'unité de contact par pression (3) met en contact par pression la partie centrale du tissu de renfort (14).

3. Appareil de laminage de tissu de renfort selon la revendication 1 ou 2, dans lequel la tension du tissu de renfort (14) qui sort de l'unité d'alimentation de feuille (2) est générée du fait d'une résistance de friction de l'unité d'alimentation de feuille.

4. Appareil de laminage de tissu de renfort selon l'une quelconque des revendications 1 à 3, dans lequel
le moule (15) permet de former un produit en matière plastique renforcé de fibre de grande taille, tel qu'une pale d'éolienne, en laminant le tissu de renfort (14) dessus ;
l'unité d'alimentation de feuille (2) comprend une poignée (8) ; et
l'unité de contact par pression (3) comprend un rouleau de contact par pression (3) et une unité d'entraînement (9) qui entraîne le rouleau de contact par pression.

5. Appareil de laminage de tissu de renfort selon l'une quelconque des revendications 1 à 4, comportant une unité de contact par pression auxiliaire (4, 5) qui pousse le tissu de renfort (14) sur le moule.

6. Appareil de laminage de tissu de renfort selon l'une quelconque des revendications 1 à 5, comportant une unité mobile (20) à laquelle l'unité d'alimentation de feuille (2) et l'unité de contact par pression (3) sont reliées,
dans lequel l'unité mobile (20) est déplacée le long de la direction longitudinale du moule (15) et peut librement déplacer l'unité d'alimentation de feuille (2) et l'unité de contact par pression (3) dans la direction transversale du moule et dans une direction verticale perpendiculaire à la direction longitudinale et à la direction transversale du moule.

7. Procédé de laminage utilisant l'appareil de laminage de tissu de renfort selon l'une quelconque des revendications 1 à 6.
